# EUROPÄISCHE PATENTSCHRIFT

(11) **EP 1 022 796 B1**
(45) Veröffentlichungstag und Bekanntmachung des Hinweises auf die Patenterteilung: **21.06.2006**
(21) Anmeldenummer: 99122279.5
(22) Anmeldetag: 09.11.1999
(51) Int. Cl.: H01M 8/04

(54) **Verfahren zum Betrieb eines Brennstoffzellensystems und Brennstoffzellensystem**
Method for the operation of a fuel cell system and fuel cell system
Procédé pour faire fonctionner un système de piles à combustible et système de piles à combustible

(30) Priorität: 21.01.1999 DE 19902219
(43) Veröffentlichungstag der Anmeldung: 26.07.2000
(73) Patentinhaber: DaimlerChrysler AG, 70567 Stuttgart (DE)
(72) Erfinder: Konrad, Gerhard, Dr., 70197 Stuttgart (DE)

(56) Entgegenhaltungen:
- WO-A-99/05741
- WO-A-99/28985
- WO-A-99/67830
- PERRY, R., GREEN, D.: "Perry's Chemical Engineers' Handbook" 1984, MCGRAW-HILL BOOK COMPANY , SINGAPORE , XP002281202 * Seiten 16-45 - Seiten 16-48 * * Seiten 19-45 - Seiten 19-48 *

## Beschreibung

Die vorliegende Erfindung betrifft ein Verfahren zum Betrieb eines Brennstoffzellensystems sowie ein Brennstoffzellensystem.

Bei der Stromerzeugung mittels Brennstoffzellen, insbesondere sogenannten PEM (Polymermembran)-Brennstoffzellen wird der Brennstoffzelle bzw. einem aus einer Mehrzahl übereinander gestapelter Brennstoffzellen gebildeter Brennstoffzellenblock (Stack) Wasserstoff bzw. ein wasserstoffhaltiges Gas und Luft bzw. reiner Sauerstoff zugeführt. Um ein Austrocknen der Membran zu verhindern, wird der Luftstrom und/oder der Brennstoffstrom vor Eintritt in die Brennstoffzelle befeuchtet, wobei das Befeuchtungswasser hierzu dem Kühlkreislauf oder einem separaten Zwischenspeicher entnommen werden kann. Bei der Reaktion von Wasserstoff mit dem Sauerstoff der Luft fällt als Produkt Wasser an, das mit dem Abgasstrom aus dem Brennstoffzellenblock ausgetragen wird. Das in dem Abgasstrom enthaltene Wasser kann anschließend teilweise aus dem Abgasstrom auskondensiert und dem Kühlkreislauf bzw. dem separaten Zwischenspeicher wieder zugeführt werden.

Bei der Direkt-Methanol-Brennstoffzelle (DMFC) dient anstelle des Wasserstoffs ein Methanol-Wasser-Gemisch als flüssiger Energieträger. Auch hier wird ein Teil des Wassers über die Membran transportiert und mit dem Luftstrom aus der Brennstoffzelle ausgetragen, so daß ein Zusatz von Wasser zum Methanol-Wasser-Kreislauf nötig ist, wobei das Wasser vorteilhaft in flüssiger Form aus dem Abluftstrom rückgewonnen werden kann.

Aus der US-PS 5,360,679 ist ein Brennstoffzellensystem bekannt, bei dem in dem Brennstoffzellenblock erzeugtes Wasser wiederverwertet wird. Das wiederverwertete Wasser dient zum Kühlen des Brennstoffzellenblocks und zur Befeuchtung sowohl des Brennstoff- als auch des Luftstroms vor deren Einspeisung in den Brennstoffzellenblock. Dazu umfaßt das bekannte Brennstoffzellensystem ein Wasserrückgewinnungs-Teilsystem, in dem das in dem Abgasstrom des Brennstoffzellenblocks enthaltene Wasser mittels Wasserabscheidern zurückgewonnen und einer weiteren Verwendung, beispielsweise einer Speicherung in einem Wasserspeicher und der Befeuchtung des dem Brennstoffzellenblock zugeleiteten Luftstromes, zugeführt. Die in dem bekannten Brennstoffzellensystem Verwendung findenden Wasserabscheider scheiden mechanisch, beispielsweise durch Umlenkung oder Fliehkraft, in dem Luftstrom enthaltene Wassertröpfchen aus. Zur zusätzlichen Teil-Rückgewinnung von im Abluftstrom enthaltenem Wasserdampf werden Wasserkondensatoren eingesetzt, in denen durch Abkühlung des Abgasstroms ein Teil des enthaltenen Wasserdampfes auskondensiert und ebenfalls mit mechanischen Abscheidern abgetrennt wird.

Bei einem Betrieb einer PEM-Brennstoffzelle mit reinem Wasserstoff verläßt in der Bilanz weniger Wasser das Gesamtsystem (mit dem Abgasstrom) als Wasser in dem System erzeugt wird. Wird der benötigte Wasserstoff intern durch die Reformierung flüssiger Energieträger wie beispielsweise Methanol, Benzin oder Diesel erzeugt, so wird für die Reformierung in der Regel zusätzlich Wasser benötigt. Dies kann dazu führen, daß in der Bilanz mehr Wasser verbraucht bzw. aus dem System ausgetragen wird, als im Gesamtsystem durch die Reaktion erzeugt und im Zwischenspeicher gespeichert wird. Wie bereits erläutert, ist grundsätzlich eine Rückgewinnung des im Abgasstrom enthaltenen Wassers durch Auskondensation möglich, wobei jedoch beim Einsatz in mobilen Systemen, insbesondere im Antrieb von Kraftfahrzeugen, durch das zur Verfügung stehende Temperaturniveau des Fahrzeugkühlers Grenzen gesteckt sind. Auf der anderen Seite sind gerade beim Einsatz in mobilen Systemen zur Vermeidung von Nachtanken und Speichern von Wasser hohe Anforderungen an eine ausgeglichene Wasserbilanz zu stellen.

Aus der nicht vorveröffentlichten WO 99/05741 A1 ist ein Brennstoffzellensystem bekannt, welches die Merkmale des Oberbegriffs der Ansprüche 1 und 9 zeigt.

Ferner zeigt "Perry's Chemical Engineers' Handbook", Perry, R., Green, D. 1984, McGraw-Hill Book Company, Singapore, dass der Austausch von Feuchtigkeit über Adsorption und Desorption an sich möglich ist.

Ausgehend von diesem Stand der Technik liegt der Erfindung die Aufgabe zugrunde, ein Verfahren zum Betrieb eines Brennstoffzellensystems sowie ein Brennstoffzellensystem bereitzustellen, mit dem bzw. bei dem mit möglichst einfachen und kompakt ausführbaren Mitteln eine möglichst effiziente Rückgewinnung von Wasser aus dem Abgasstrom eines Brennstoffzellenblocks zur Erzielung einer ausgeglichenen Wasserbilanz erreichbar ist.

Zur Lösung dieser Aufgabe wird zum einen ein Verfahren mit den Merkmalen des Anspruches 1, zum anderen ein Brennstoffzellensystem mit den Merkmalen des Anspruches 9 vorgeschlagen.

Demnach erfolgt in einem Brennstoffzellensystem mit mindestens einer Brennstoffzelle eine Rückgewinnung von in einem Abluftstrom der mindestens einen Brennstoffzelle enthaltener Feuchtigkeit mittels Adsorption, anschließender Desorption adsorbierten Wassers und Rückführung in den Zuluftstrom und/oder den Brennstoffstrom oder in den Flüssigkeitsstrom der Anodenseite und/oder in dem Kühlwasserkreislauf der mindestens einen Brennstoffzelle. Durch die Anwendung von Adsorptionstechnik zur Extraktion von Feuchtigkeit aus dem Abluftstrom der mindestens einen Brennstoffzelle wird mit relativ geringem Aufwand im Vergleich zu den bekannten Techniken ein hoher Anteil des als Feuchtigkeit im Abluftstrom enthaltenen Wassers zurückgewonnen. Insbesondere gestattet die Anwendung der Adsorptionstechnik kompakte Abmessungen, wodurch die Einsatzmöglichkeiten eines Brennstoffzellensystems im mobilen Bereich verbessert werden. Das adsorbierte Wasser wird anschließend durch Energiebeaufschlagung mittels für die mindestens eine Brennstoffzelle erhitzter Zuluft desorbiert und weiter verwendet. Das zurückgewonnene Wasser kann zur weiteren Verwendung vorzugsweise zur Befeuchtung des für die Reaktion in der Brennstoffzelle bestimmten Zuluftstroms zur Brennstoffzelle zurückgeführt werden, wobei vor der Rückführung zum Zuluftstrom beispielsweise eine Zwischenspeicherung in einem dafür vorgesehenen Wassertank erfolgen kann. Das zurückgewonnene Wasser kann auch dem Brennstoffzustrom zurückgeführt werden oder, bei einer vorgeschalteten Reformierungsstufe, der Reformereinheit zugeführt werden. Darüber hinaus kann das Wasser bei DMFC-Systemen zur Ergänzung des flüssigen Methanol-Wasser-Gemischs Verwendung finden.

Vorteilhafte Ausgestaltungen der Erfindung ergeben sich aus den Unteransprüchen.

In besonders vorteilhafter Ausgestaltung der Erfindung erfolgt die Adsorption mittels eines Adsorbens, das auf einem kontinuierlich oder getaktet rotierenden Träger angeordnet ist. Durch diese rotierende Anordnung (Rotoradsorber) kann jeweils ein Abschnitt des beispielsweise scheibenförmig oder zylinderförmig ausgebildeten drehbaren Trägers in den Abluftstrom gebracht werden und dort Feuchtigkeit aus dem Abluftstrom adsorbieren. Durch die Rotation des Trägers wird der im Abluftstrom befindliche Abschnitt dann aus dem Abluftstrom weggedreht und in einen Desorptionsbereich hineingedreht, in welchem durch Zufuhr von Energie, in der Form von erhitzter Zuluft, das adsorbierte Wasser wieder desorbiert wird. Um für die anschließende Adsorption günstige Ausgangsbedingungen zu schaffen, kann das Adsorbens nach der Desorption zusätzlich gekühlt werden. Die Dreh- bzw. Taktzahl des Rotoradsorbers wird dabei insbesondere dem jeweiligen Lastzustand angepaßt.

In alternativer Ausgestaltung der Erfindung erfolgt die Adsorption bzw. Desorption in einen oder mehreren Festbetten, deren Zu- und Abluftströme zyklisch umgeschaltet werden. In dieser Ausgestaltung wird somit nicht das Absorbens abwechselnd in den Adsorptions- bzw. den Desorptionsbereich gedreht, sondern die Zuluft- und Abluftströme werden abwechselnd auf das bzw. die Festbetten umgeleitet. Durch diese Maßnahme kann die Desorption auf einfache Weise durch indirekte Wärmezufuhr, beispielsweise aus dem Kühlkreislauf des Brennstoffzellensystems oder durch elektrische Heizung, unterstützt werden.

Die vorliegende Erfindung eignet sich insbesondere zur Anwendung in Brennstoffzellensystemen aus PEM-Brennstoffzellen sowohl beim Betrieb mit Wasserstoff oder Reformat als auch mit flüssigen Energieträgern (DMFC), wobei auch eine Kombination aus Kondensation und Adsorption möglich ist. Sie ist jedoch nicht auf PEM-Brennstoffzellensysteme beschränkt.

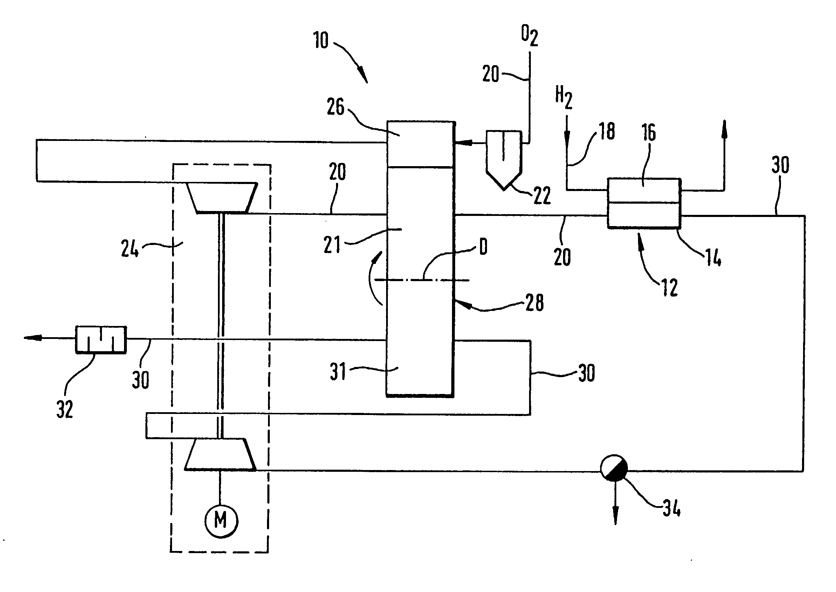

Die Erfindung ist anhand eines Ausführungsbeispieles in der Zeichnung dargestellt und wird im folgenden unter Bezugnahme auf die Zeichnung näher erläutert.

Die einzige Figur zeigt ein Blockschaltbild eines erfindungsgemäßen Brennstoffzellensystems.

Das in der Figur dargestellte Brennstoffzellensystem 10 umfaßt eine Brennstoffzelle 12 mit einer Kathode 14 und einer Anode 16. Zur besseren Übersichtlichkeit der Darstellung ist in der Figur nur eine Brennstoffzelle 12 eingezeichnet - in der Praxis handelt es sich dahingegen um einen durch Stapelung mehrerer Brennstoffzellen gebildeten Brennstoffzellenblock.

Der Anode 16 der Brennstoffzelle 12 wird über eine Leitung 18 Wasserstoff H₂ oder ein wasserstoffhaltiges Gas (Reformat) zugeführt. Der Kathode 14 der Brennstoffzelle 12 wird über eine Leitung 20 Sauerstoff O₂ enthaltende Ansaugluft zugeführt. Die Ansaugluft durchläuft einen Luftfilter 22 und einen Kompressor einer Kompressor-Expander-Einheit 24, bevor sie der Kathode 14 der Brennstoffzelle 12 zugeführt wird.

Das Brennstoffzellensystem 10 umfaßt des weiteren einen drehbaren Adsorber 28 (Rotoradsorber), der derart angeordnet ist, daß er mit einem Abschnitt in dem Zuluftstrom 20 und mit einem anderen Abschnitt in einem Abluftstrom 30 der Brennstoffzelle 12 liegt. Die Drehachse D des Rotoradsorbers ist derart zwischen Zuluftstrom 20 und Abluftstrom 30 angeordnet, daß bei Drehung des Rotoradsorbers 28 im Sinne des eingezeichneten Pfeiles sich stets ein Abschnitt des Rotoradsorbers 28 in dem Zuluftstrom 20 und ein anderer Abschnitt in dem Abluftstrom 30 befindet. Dadurch werden ein Desorptionsbereich 21 im Zuluftstrom und ein Adsorptionsbereich 31 im Abluftstrom 30 definiert.

Die Abluft der Kathode 14 der Brennstoffzelle 12 wird entlang einer Leitung 30 durch einen Expander der Kompressor-Expander-Einheit 24 dem Adsorptionsbereich 31 des Rotoradsorbers 28 und danach einem Schalldämpfer 32 zugeführt. In der Abluftleitung 30 kann, wie in der Figur dargestellt, ein der Kompressor-Expander-Einheit 24 vorgeordneter Kondensat-Ableiter 34 vorgesehen sein, der bereits den Teil der in der Kathodenabluft in Form von Nebeltröpfchen enthaltenen Feuchtigkeit abscheidet. Ebenso kann auch unmittelbar vor dem Adsorbereintritt ein Kondensat-Ableiter angeordnet sein.

Der Kondensat-Ableiter 34 kann auch dazu dienen, einen Teil des rückgeführten Wasseranteils flüssig zurückzugewinnen, weil durch die erhöhte Feuchtigkeit der Zuluft vor der Kathode 14 der Brennstoffzelle 12 der Anteil der in Form von Nebeltröpfchen enthaltenen Feuchtigkeit größer sein wird. Ebenso ist zur flüssigen Rückgewinnung die Verwendung eines weiteren Kondensat-Ableiters mit oder ohne zusätzlichen Wärmetauscher (Kühler) vor oder hinter der Brennstoffzelle 12 denkbar.

Die verbleibende Feuchtigkeit in der Abluft wird in dem Adsorptionsbereich 31 des Rotoradsorbers 28 adsorbiert. Das adsorbierte Wasser wird durch Drehung im Sinne des eingezeichneten Pfeiles in den Desorptionsbereich 21 des Rotoradsorbers 28 gedreht und dort durch Energiezufuhr, in Form von erhitzter Zuluft, desorbiert und direkt in den Zuluftstrom 20 zur Befeuchtung der Zuluft aufgenommen. Somit erfolgt die Adsorption des Wassers aus dem Abluftstrom der Brennstoffzelle auf niedrigem Druckniveau unmittelbar vor dem Verlassen des Brennstoffzellensystems 10. Selbstverständlich kann die Adsorption auch vor dem Expander erfolgen.

In dem in der Figur dargestellten Ausführungsbeispiel eines erfindungsgemäßen Brennstoffzellensystems erfolgt die Desorption mit Hilfe des nach dem Durchtritt durch den Luftkompressor der Kompressor-Expander-Einheit erhitzten Zuluftstroms vor dem Eintritt in den Kathodenraum der Brennstoffzelle. Somit wird als Trägergasstrom für die Desorption erfindungsgemäß der Zuluftstrom zur Brennstoffzelle auf hohem Druckniveau unmittelbar vor Eintritt in die Brennstoffzelle 12 verwendet. Alternativ hierzu kann eine Desorption durch den Zuluftstrom auch vor dem Kompressor erfolgen. Der als Adsorbens dienende, in dem Rotoradsorber eingebrachte Feststoff kann, wie in dem dargestellten Ausführungsbeispiel möglich, nach der Desorption in einer Kühlungseinheit 26 durch die Ansaugluft gekühlt werden, bevor er wieder in den Adsorptionsbereich 31 gedreht wird.

Als geeignete Absorbentien zur Verwendung in einem erfindungsgemäßen Brennstoffzellensystem sind insbesondere Silikagel und hydrophile Zeolithe geeignet, wobei jedoch auch andere Feststoffe mit einer großen inneren Oberfläche verwendbar sind. Die Adsorbentien können sowohl in einer Partikelschüttung als auch in Form geordneter Strukturen (Monolithstrukturen, Wikkeladsorber) verwendet werden. Im letzteren Falle ist eine Aufbringung des Adsorbens auf ein Trägermaterial oder auch eine Verwendung des homogenen Stoffes in einstückiger Form möglich.

Die Wärmekapazität des insbesondere als Feststoff vorliegenden Adsorbens kann im Vergleich zu seiner Sorptionskapazität durch Hinzufügen eines Inertstoffes so eingestellt werden, daß eine energieoptimierte Desorption durch Wärmerückgewinnung bei gleichzeitig guter Adsorption und Desorption erreicht wird. Das Hinzufügen des Inertstoffes kann sowohl in Form einer separaten Schicht oder durch Mischung mit dem Adsorbens erfolgen.

Wie bereits vorstehend ausgeführt, ist die Erfindung nicht auf das dargestellte Ausführungsbeispiel mit einem Rotoradsorber beschränkt. Vielmehr ist auch eine Ausführung als Festbettadsorptionsanlage möglich, die ein oder mehrere Festbetten umfaßt, auf die der Zu- bzw. der Abluftstrom jeweils zyklisch umgeschaltet werden.

Mit dem erfindungsgemäßen Verfahren bzw. dem erfindungsgemäßen Brennstoffzellensystem rückgewonnenes Wasser kann in dem Brennstoffzellensystem im Sinne einer Wasserbilanzausgleichung vielfältig eingesetzt werden. Insbesondere kann das rückgewonnene Wasser dampfförmig oder flüssig wenigstens teilweise zur Dampfreformierung gasförmiger oder flüssiger Energieträger, zur Hoch- oder Niedertemperatur-Shift-Reaktion gasförmiger oder flüssiger Energieträger oder zur autothermen Reformierung gasförmiger oder flüssiger Energieträger eingesetzt werden. Darüber hinaus ist bei DMFC-Systemen der Einsatz als Ergänzungswasser für den flüssigen Energieträger Methanol-Wasser-Gemisch möglich.

## Patentansprüche

1. Verfahren zum Betrieb eines Brennstoffzellensystems, das mindestens eine Brennstoffzelle (12) umfaßt, wobei in einem Abluftstrom (30) der mindestens einen Brennstoffzelle (12) enthaltene Feuchtigkeit mittels Adsorption (31) dem Abluftstrom (30) entzogen, das adsorbierte Wasser desorbiert (21) und in den Zuluftstrom (20) und/oder den Brennstoffstrom und/oder in den Flüssigkeitsstrom der Anodenseite und/oder in den Kühlwasserkreislauf der mindestens einen Brennstoffzelle (12) zurückgeführt wird,
**dadurch gekennzeichnet, daß**
das adsorbierte Wasser mittels für die mindestens eine Brennstoffzelle (12) vorgesehener erhitzter Zuluft desorbiert (21) wird.

2. Verfahren nach Anspruch 1,
**dadurch gekennzeichnet, daß**
als mindestens eine Brennstoffzelle (12) eine PEM-Brennstoffzelle eingesetzt wird.

3. Verfahren nach Anspruch 1 oder 2,
**dadurch gekennzeichnet, daß**
das desorbierte Wasser dampfförmig oder flüssig rückgeführt wird.

4. Verfahren nach einem der Ansprüche 1 bis 3,
**dadurch gekennzeichnet, daß**
für die Adsorption (31) ein Adsorbens verwendet wird, das in homogener Schüttung vorliegt, das auf einem Trägermaterial aufgebracht ist oder das in einer geordneten Struktur als homogener Stoff vorliegt.

5. Verfahren nach einem der Ansprüche 1 bis 4,
**dadurch gekennzeichnet, daß**
für die Adsorption (31) ein Adsorbens verwendet wird, das zwischen Adsorption und Desorption kontinuierlich oder getaktet rotierend angeordnet ist.

6. Verfahren nach einem der Ansprüche 1 bis 4,
**dadurch gekennzeichnet, daß**
die Adsorption (31) bzw. Desorption (21) in mindestens einem Festbett erfolgt, dessen Zu- und Abluftströme zyklisch umgeschaltet werden.

7. Verfahren nach Anspruch 5 oder 6,
**dadurch gekennzeichnet, daß**
das Adsorbens nach der Desorption gekühlt wird.

8. Verfahren nach Anspruch 7,
**dadurch gekennzeichnet, daß**
zur Kühlung Ansaugluft verwendet wird.

9. Brennstoffzellensystem mit mindestens einer
Brennstoffzelle (12), eine Rückgewinnung von in einem Abluftstrom (30) der mindestens einen Brennstoffzelle (12) enthaltener Feuchtigkeit mittels Adsorption (31), anschließender Desorption (21) adsorbierten Wassers und Rückführung in den Zuluftstrom (20) und/oder den Brennstoffstrom und/oder in den Flüssigkeitsstrom der Anodenseite und/oder in den Kühlwasserkreislauf der mindestens einen Brennstoffzelle (12) erfolgt,
**dadurch gekennzeichnet, daß**
die Desorption (21) des adsorbierten Wassers mittels für die mindestens eine Brennstoffzelle (12) vorgesehener erhitzter Zuluft erfolgt.

10. Brennstoffzellensystem nach Anspruch 9,
**dadurch gekennzeichnet, daß**
die mindestens eine Brennstoffzelle (12) eine PEM-Brennstoffzelle ist.

11. Brennstoffzellensystem nach Anspruch 9 oder 10,
**dadurch gekennzeichnet, daß**
die Rückfuhr des desorbierten Wassers dampfförmig oder flüssig erfolgt.

12. Brennstoffzellensystem nach einem der Ansprüche 9 bis 11,
**dadurch gekennzeichnet, daß**
die Adsorption (31) mittels eines Adsorbens erfolgt, das in homogener Schüttung vorliegt, das auf einem Trägermaterial aufgebracht ist oder das in einer geordneten Struktur als homogener Stoff vorliegt.

13. Brennstoffzellensystem nach einem der Ansprüche 9 bis 12,
**dadurch gekennzeichnet, daß**
die Adsorption (31) mittels eines Adsorbens erfolgt, das zwischen Adsorption und Desorption kontinuierlich oder getaktet rotierend angeordnet ist.

14. Brennstoffzellensystem nach einem der Ansprüche 9 bis 12,
**dadurch gekennzeichnet, daß**
die Adsorption (31) bzw. Desorption (21) in mindestens einem Festbett erfolgt, dessen Zu- und Abluftströme zyklisch umgeschaltet werden.

15. Brennstoffzellensystem nach Anspruch 13 oder 14,
**dadurch gekennzeichnet, daß**
nach der Desorption eine Kühlung des Adsorbens erfolgt.

16. Brennstoffzellensystem nach Anspruch 15,
**dadurch gekennzeichnet, daß**
die Kühlung mittels der Ansaugluft erfolgt.

## Claims

1. Method for operating a fuel cell system which comprises at least one fuel cell (12), in which moisture contained in a waste-air stream (30) of the at least one fuel cell (12) is removed from the waste-air stream (30) by means of adsorption (31), the adsorbed water is desorbed (21) and recirculated into the feed-air stream (20) and/or the fuel stream and/or into the liquid stream on the anode side and/or into the cooling-water circuit of the at least one fuel cell (12), **characterized in that** the adsorbed water is desorbed (21) by means of heated feed air intended for the at least one fuel cell (12).

2. Method according to Claim 1, **characterized in that** a PEM fuel cell is used as at least one fuel cell (12).

3. Method according to Claim 1 or 2, **characterized in that** the desorbed water is recirculated in vapour or liquid form.

4. Method according to one of Claims 1 to 3, **characterized in that** an adsorbent which is in the form of a homogeneous bulk material applied to a carrier material or is in the form of an ordered structure as a homogeneous substance, is used for the adsorption (31).

5. Method according to one of Claims 1 to 4, **characterized in that** an adsorbent which is arranged to rotate cyclically or continuously between adsorption and desorption is used for the adsorption (31).

6. Method according to one of Claims 1 to 4, **characterized in that** the adsorption (31) and/or desorption (21) takes place in at least one fixed bed, the feed-air and waste-air streams of which are switched over cyclically.

7. Method according to Claim 5 or 6, **characterized in that** the adsorbent is cooled following the desorption.

8. Method according to Claim 7, **characterized in that** intake air is used for cooling.

9. Fuel cell system with at least one fuel cell (12), recirculation of moisture contained in a waste-air stream (30) of the at least one fuel cell (12) by means of adsorption (31), subsequent desorption (21) of adsorbed water and recirculation into the feed air stream (20) and/or the fuel stream and/or into the liquid stream of the anode side and/or into the cooling water circuit of the at least one fuel cell (12), **characterized in that** the desorption (21) of the adsorbed water is carried out by means of heated feed air intended for the at least one fuel cell (12).

10. Fuel cell system according to Claim 9, **characterized in that** the at least one fuel cell (12) is a PEM fuel cell.

11. Fuel cell system according to Claim 9 or 10, **characterized in that** the desorbed water is recirculated in vapour or liquid form.

12. Fuel cell system according to one of Claims 9 to 11, **characterized in that** the adsorption (31) is carried out by means of an adsorbent which is in the form of a homogeneous bulk material applied to a carrier material or is in the form of an ordered structure as a homogeneous substance.

13. Fuel cell system according to one of Claims 9 to 12, **characterized in that** the adsorption (31) is carried out by means of an adsorbent which is arranged so as to rotate continuously or cyclically between adsorption and desorption.

14. Fuel cell system according to one of Claims 9 to 12, **characterized in that** the adsorption (31) and/or desorption (21) is carried out in at least one fixed bed, the feed-air and waste-air streams of which are switched over cyclically.

15. Fuel cell system according to Claim 13 or 14, **characterized in that** the desorption is followed by cooling of the adsorbent.

16. Fuel cell system according to Claim 15, **characterized in that** the cooling is carried out by means of the intake air.

## Revendications

1. Procédé pour faire fonctionner un système de cellules à combustible qui comprend au moins une cellule à combustible (12), sachant que le liquide contenu dans un flux d'air sortant (30) de la cellule à combustible (12) au moins unique est extrait du flux d'air sortant (30) par adsorption (31), que l'eau adsorbée est désorbée (21) et est recyclée dans le flux d'air entrant (20) et/ou dans le flux de combustible et/ou dans le flux de liquide côté anode et/ou dans le circuit d'eau de refroidissement de la cellule à combustible (12) au moins unique, **caractérisé en ce que** l'eau adsorbée est désorbée (21) au moyen d'air entrant échauffé prévu pour la cellule à combustible (12) au moins unique.

2. Procédé selon la revendication 1, **caractérisé en ce qu'**on utilise comme cellule à combustible (12) au moins unique une cellule à combustible à membrane d'électrolyte échangeuse de protons (abréviation anglaise PEM).

3. Procédé selon la revendication 1 ou 2, **caractérisé en ce que** l'eau désorbée est recyclée à l'état de vapeur ou à l'état liquide.

4. Procédé selon l'une quelconque des revendications 1 à 3, **caractérisé en ce qu'**on utilise pour l'adsorption (31) un adsorbant qui est présent en vrac homogène, qui est déposé sur un substrat ou qui est présent avec une structure ordonnée en tant que substance homogène.

5. Procédé selon l'une quelconque des revendications 1 à 4, **caractérisé en ce qu'**on utilise pour l'adsorption (31) un adsorbant qui est disposé en tournant continûment ou cycliquement entre l'adsorption et la désorption.

6. Procédé selon l'une quelconque des revendications 1 à 4, **caractérisé en ce que** l'adsorption (31) et la désorption (21) s'effectuent dans au moins un lit fixe dont les flux d'air entrant et d'air sortant sont cycliquement commutés.

7. Procédé selon la revendication 5 ou 6, **caractérisé en ce que** l'adsorbant est refroidi à la suite de la désorption.

8. Procédé selon la revendication 7, **caractérisé en ce qu'**on utilise pour le refroidissement de l'air d'aspiration.

9. Système de cellules à combustible comprenant au moins une cellule à combustible (12), sachant que s'effectuent une récupération par adsorption (31) du liquide contenu dans un flux d'air sortant (30) de la cellule à combustible (12) au moins unique, puis une désorption (21) de l'eau adsorbée et son recyclage dans le flux d'air entrant (20) et/ou dans le flux de combustible et/ou dans le flux de liquide côté anode et/ou dans le circuit d'eau de refroidissement de la cellule à combustible (12) au moins unique,
**caractérisé en ce que** la désorption (21) de l'eau adsorbée s'effectue au moyen d'air entrant échauffé prévu pour la cellule à combustible (12) au moins unique.

10. Système de cellules à combustible selon la revendication 9, **caractérisé en ce que** la cellule à combustible (12) au moins unique est une cellule à combustible à membrane d'électrolyte échangeuse de protons (abréviation anglaise PEM).

11. Système de cellules à combustible selon la revendication 9 ou 10, **caractérisé en ce que** le recyclage de l'eau désorbée s'effectue à l'état de vapeur ou à l'état liquide.

12. Système de cellules à combustible selon l'une quelconque des revendications 9 à 11, **caractérisé en ce que** l'adsorption (31) s'effectue au moyen d'un adsorbant qui est présent en vrac homogène, qui est déposé sur un substrat ou qui est présent avec une structure ordonnée en tant que substance homogène.

13. Système de cellules à combustible selon l'une quelconque des revendications 9 à 12, **caractérisé en ce que** l'adsorption (31) s'effectue au moyen d'un adsorbant qui est disposé en tournant continûment ou cycliquement entre l'adsorption et la désorption.

14. Système de cellules à combustible selon l'une quelconque des revendications 9 à 12, **caractérisé en ce que** l'adsorption (31) et la désorption (21) s'effectuent dans au moins un lit fixe dont les flux d'air entrant et d'air sortant sont cycliquement commutés.

15. Système de cellules à combustible selon la revendication 13 ou 14, **caractérisé en ce qu'**un refroidissement de l'adsorbant est effectué à la suite de la désorption.

16. Système de cellules à combustible selon la revendication 15, **caractérisé en ce que** le refroidissement s'effectue au moyen de l'air d'aspiration.
